# EUROPÄISCHE PATENTANMELDUNG

(11) **EP 4 838 203 A1**
(43) Veröffentlichungstag der Anmeldung: **11.11.2026**
(21) Anmeldenummer: 26174956.8
(22) Anmeldetag: 28.04.2026
(51) Int. Cl.: G01N 15/0227, G01N 15/0205, G01N 11/00

(54) **MESSANORDNUNG, VERFAHREN ZUR ECHTZEITERFASSUNG VON RHEOLOGISCHEN PARAMETERN EINES MEDIUMS UND VERFAHRENSTECHNISCHE ANLAGE ODER MESSGERÄT UMFASSEND WENIGSTENS EINE MESSANORDNUNG**

(30) Priorität: 06.05.2025 DE 102025117316
(71) Anmelder: Netzsch-Gerätebau GmbH, 95100 Selb (DE)
(72) Erfinder: Küspert, Dr., Sabrina, 95100 Selb (DE); Dunkel, Johannes, 95111 Rehau (DE); Szántó, Levente, 95028 Hof (DE); Özgül, Onur, 90480 Nürnberg (DE); Müller, Christian, 95186 Höchstädt im Fichtelgebirge (DE); Reul, Maximilian, 95168 Marktleuthen (DE); Rummel, Florian, 95100 Selb (DE); Taubmann, Dr., Rebekka, 95100 Selb (DE)

(57) **Zusammenfassung**

Die vorliegende Erfindung schafft eine Messanordnung, umfassend einen in einer verfahrenstechnischen Anlage oder einem Messgerät integrierbaren, von einem Medium durchströmbaren Messkanalabschnitt, wobei der Messkanalabschnitt wenigstens ein Sichtfenster und wenigstens eine dem Sichtfenster zugeordnete Beobachtungseinheit zur optischen Erfassung des Mediums aufweist, ein Verfahren zur Echtzeiterfassung von rheologischen Parametern eines Mediums, sowie eine verfahrenstechnische Anlage oder ein Messgerät umfassend wenigstens eine Messanordnung..

## Beschreibung

Die vorliegende Erfindung betrifft eine Messanordnung umfassend einen in einer verfahrenstechnischen Anlage oder einem Messgerät integrierbaren, von einem Medium durchströmbaren Messkanalabschnitt, ein Verfahren zur Echtzeiterfassung von rheologischen Parametern eines Mediums in der Messanordnung sowie eine verfahrenstechnische Anlage oder eine Messgerät, umfassend wenigstens eine Messanordnung.

In Produktionslinien oder eigenständigen (Labor-)Messgeräten, die fließfähige Medien verarbeiten werden über in die jeweiligen Medienleitungen integrierte Messanordnungen kontinuierlich und ohne Unterbrechung des Prozesses rheologische Messdaten des Mediums erfasst. So wird z. B. in der chemischen Industrie, während der Produktion kontinuierlich die Viskosität von beispielsweise Farben, Lacken, Klebstoffen oder Polymeren überwacht, um Konsistenz und Fließeigenschaften sicherzustellen, während in der Kosmetikindustrie die Fließeigenschaften und Stabilität von kosmetischen Produkten wie beispielsweise Shampoos, Lotionen und Gels kontrolliert wird. Die Messanordnungen, die auch als eigenständige (Labor-)Messgeräte ausgebildet sein können, erfassen mit einer Vielzahl von mechanischen und elektronischen Sensoren in komplexen Anordnungen an oder in den jeweiligen Medienleitungen, rheologische Kenndaten, wie beispielsweise die Viskosität des Mediums, die Scherrate, die Dichte des Mediums und die Medientemperatur. Herkömmlicherweise werden vor allem mechanische, sensorgestützte Messverfahren verwendet, wobei die Ableitung der Kenndaten auf Basis von Druckunterschieden, Scherung oder Rotation, wie in kapillarbasierten oder rotationsbasierten Rheometriesysteme sowie in mit entsprechenden Sensoren und optischen Erfassungsmitteln ausgestatteten, miniaturisierten Analysevorrichtungen wie Mikrochips oder Mikrofluidiksystemen, erfolgt. Alternativ oder ergänzend hierzu können Schwingungstechnologien eingesetzt werden, die Resonanzfrequenzen zur Bestimmung von Viskosität und Dichte des Mediums nutzen. Daneben besteht auch die Möglichkeit, in regelmäßigen Abständen Proben aus dem Medienstrom zu entnehmen und deren rheologische Eigenschaften in gesonderten Geräten zu analysieren. Nachteilig an bekannten rheometrischen Messanordnungen in Medienleitungen ist, dass diese mechanische Messungen als Ein- oder Zweipunkt-Messungen durchführen, ohne das Strömungs- oder Deformationsprofil des jeweiligen Mediums zu analysieren. Die gesonderte Analyse von Einzelproben ist zeitaufwändig und zeigt Änderungen der rheologischen Eigenschaften nur zeitversetzt an.

Es ist daher Aufgabe der vorliegenden Erfindung, eine konstruktiv einfache Möglichkeiten zur Erfassung von rheologischen Parametern eines Mediums und zur Ableitung einer Vielzahl rheologischer Kenndaten auf Basis der erfassten Parameter zu schaffen.

Erfindungsgemäß wird diese Aufgabe jeweils durch die Gegenstände der unabhängigen Ansprüche gelöst.

Gemäß einem ersten Aspekt der Erfindung ist eine Messanordnung, umfassend einen in einer verfahrenstechnischen Anlage oder einem Messgerät integrierbaren, von einem Medium durchströmbaren Messkanalabschnitt, wobei der Messkanalabschnitt wenigstens ein Sichtfenster und wenigstens eine dem Sichtfenster zugeordnete Beobachtungseinheit zur optischen Erfassung des Mediums aufweist, Die Erfassung erfolgt dabei insbesondere in Echtzeit.

Gemäß einem zweiten Aspekt der Erfindung ist ein Verfahren zur Echtzeiterfassung von rheologischen Parametern eines Mediums in einer Messanordnung vorgesehen, wobei das Verfahren die Schritte: Optisches Erfassen von Bild- oder Videosequenzen eines das Sichtfenster des Messkanalabschnittes passierenden Medienstroms durch die Beobachtungseinheit; Übertragen der erfassten Bild- oder Videosequenzen an eine Auswerteeinheit; Auswerten der erfassten von Bild- oder Videosequenzen zur Bestimmung von rheologischen Parametern des Mediums; und Ausgeben eines das Medium charakterisierenden Datensatzes, umfasst.

Gemäß einem dritten Aspekt der Erfindung ist eine verfahrenstechnische Anlage oder ein Messgerät, umfassend wenigstens eine wie vorgenannt ausgeführte Messanordnung, vorgesehen.

Eine der vorliegenden Erfindung zugrunde liegende Idee besteht darin, mit einer einzigen Messanordnung in einem laufenden Prozess, beispielsweise in einer fließfähige Medien verarbeitenden verfahrenstechnischen Produktionsanlage oder einem Messgerät, die Struktur des Mediums beim Fließen oder in Ruhe optisch zu erfassen und auf Basis des erfassten Strömungs-, Deformations- oder Ruheprofils des Mediums eine oder mehrerer rheologische Größen, wie beispielsweise (Scher-) Viskosität, Dehnviskosität, Schubspannung, viskoelastische Eigenschaften, Speichermodul und/oder Verlustmodul durch Bildauswertung rechnerisch und in Echtzeit zu quantifizieren. Vorteilhaft stellt die Erfindung hierzu eine Messanordnung zur Verfügung, in der nur eine rein optische Erfassung des Mediums bzw. von in dispersen Systemen mitgeführten Strukturen, beispielsweise eines oder mehrerer Partikel, Luftblasen oder dergleichen, erfolgt. Im erfindungsgemäßen Verfahren können dann, allein durch Auswertung der erfassten optischen Daten, d. h. durch softwaregestützte Analyse der aufgenommenen Bild- oder Videosequenzen, rheologische Messgrößen abgeleitet werden. Gleichzeitig oder ergänzend hierzu wird die Möglichkeit zur Verfügung gestellt, mittels Bildverarbeitung disperse System zu charakterisieren und verschiedene rheologisch relevante Systemparameter zu erfassen. Auf Partikelebene kann die Charakterisierung von einem oder mehreren im Medium mitgeführten Partikel(n) durchgeführt werden, um verschiedene rheologisch relevante Partikelparameter zu erfassen und auszuwerten. Durch die optional mögliche Verwendung von dem Medium beigefügten Kontrastmitteln kann die optische Trennung in unterschiedlichen Wellenlängenbereichen verbessert und das in der Bilderfassung erfassbare Spektrum erweitert werden. Ein weiterer Vorteil ist, dass die Messanordnung in konstruktiv einfacher Art und Weise ausgebildet und gering störanfällig ist.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform ist die Beobachtungseinheit als Kamera- und/oder Mikroskopeinrichtung ausgebildet, wobei die Beobachtungseinheit insbesondere für eine Erfassung von Bewegungs- und/oder Deformationsparametern des Mediums oder wenigstens einer im Medium mitgeführten Struktur eingerichtet ist. Vorteilhaft wird hierdurch die präzise Erfassung von Bewegungs- und Deformationsparametern des Mediums oder von darin mitgeführten Strukturen und Substrukturen wie Partikeln, Tropfen oder Luftblasen sowie von optional dem Medium beigefügten Kontrastmitteln oder Markern und von Phasen in Dispersionen, durchführbar und eine umfassendere und detailliertere Erfassung rheologischer Parameter, die mit rein mechanischen oder einpunktbasierten Messmethoden nicht erreichbar ist, ermöglicht. Mit Hilfe der Kamera und/oder des Mikroskops bzw. einer ebenfalls von der Erfindung umfassten Kombination daraus, werden hochauflösende Bild- und Videodaten erfasst, die eine Analyse von Strömungsprofilen und Deformationsmustern des Mediums in Echtzeit ermöglichen. Anders als in mechanischen Messungen werden nicht nur Durchschnittswerte erfasst, sondern räumlich und zeitlich aufgelöste Daten, die eine genaue Charakterisierung des Mediums ermöglichen, generiert. Darüber hinaus bzw. zusätzlich können so auch Partikel im Medium auf Basis der Bild- oder Videodaten hinsichtlich ihrer Größe, Form, Orientierung, Deformation und Konzentration analysiert werden, was sich insbesondere bei der Analyse von Dispersionen, Suspensionen oder Mehrphasenströmungen als vorteilhaft erweist. Ebenfalls möglich ist die auf Basis von Bild- oder Videodaten durchgeführte Analyse der Phasenverteilung in dispersen Systemen. Die Mikroskopeinrichtung ermöglicht vorteilhaft eine detaillierte Visualisierung von Mikrostrukturen oder Phasen im Medium, einschließlich der Wechselwirkung zwischen Partikeln und dem Fluid sowie der Phasen disperser Systeme. Die Kombination von Kamera- und Mikroskopeinheiten ist besonders vorteilhaft bei Medien mit variierenden Eigenschaften, wie z. B. nicht-Newtonsche Flüssigkeiten, Emulsionen oder Suspensionen. Vorteilhaft können so neben der Bestimmung rheologischer Größen wie Viskosität oder Scherrate auch Strukturdaten wie Phasentrennungen, Agglomerationen oder fließinduzierte Mikrostrukturen analysiert werden. Die Erfindung nicht beschränkende Beispiele für in der Messanordnung verwendbare Kameras und Mikroskopeinheiten werden nachfolgend kurz beschrieben. In der erfindungsgemäßen Messanordnung können hochauflösende Bilder und Videos erfassende Standard-Kameras (CMOS oder CCD) verwendet werden. Für die Analyse schneller Strömungen oder hochfrequenter oszillatorischer Deformationen oder niedrigfrequenter oszillatorischer Deformationen oder überlagerten Strömungen und oszillatorischen Deformationen kann alternativ oder zusätzlich eine High-Speed-Kamera verwendet werden, die zudem eine Echtzeitbeobachtung komplexer Medien mit dynamischen Veränderungen ermöglicht. Als besonders vorteilhaft für die Erfassung von dreidimensionalen Strömungsprofilen wird die Verwendung von 3D-Kamerasysteme, beispielsweise von Kamerasystemen mit Stereovision oder konfokalen Optiksystemen, angesehen, da diese die Analyse von Partikelbewegungen in mehreren Raumdimensionen ermöglichen. Auch besteht in Anpassung an das jeweiligen Analyseprotokoll die Möglichkeit, die Kamera als Fluoreszenz-Kamera auszubilden. Kombiniert mit fluoreszierenden Markern können so spezifische Partikel oder Phasen im Medium selektiv analysiert werden, was insbesondere in biotechnologischen oder pharmazeutischen Anwendungen von Vorteil ist. Neben den vorgenannten können auch Infrarot-Kameras eingesetzt werden, die die Beobachtung von Medien, die im sichtbaren Bereich nicht transparent sind, ermöglichen und die thermische Effekte im Medium, die rheologische Eigenschaften beeinflussen, erfassen können. Zur Erfassung der Medientemperatur können zudem Kameras mit zusätzlicher Wärmebildfunktion eingesetzt werden. Mögliche Ausführungsformen der Mikroskopeinheiten umfassen beispielhaft optische Mikroskope zur Erfassung detaillierter Informationen über die Mikrostruktur des Mediums, konfokale Mikroskope, die die räumlich aufgelöste Erfassung von Mikrostrukturen und Partikeln in der Tiefe des Mediums ermöglichen, und Fluoreszenzmikroskope, die in Verbindung mit fluoreszierenden Markern die Analyse spezifischer Komponenten oder Partikelgruppen im Medium, insbesondere in der Analyse biologischer oder chemischer Proben, ermöglichen. Optional ist eine Kombination der Beobachtungseinheit mit wenigstens einer gesonderten oder integrierten Beleuchtungseinheit möglich.

Gemäß einer Weiterbildung ist die Beobachtungseinheit für eine zwei- und/oder dreidimensionale Erfassung der Bewegungs- und/oder Deformationsparameter eingerichtet. Die Möglichkeit, Strömungen und Deformationsprozesse des Mediums oder von darin mitgeführten Strukturen in mehreren Dimensionen zu erfassen, erweitert vorteilhaft die Anwendbarkeit und Genauigkeit der erfindungsgemäßen Messanordnung. Während die zweidimensionale Erfassung eine einfache und schnelle Beobachtung von Strömungsprofilen und Deformationsparametern in einer Ebene ermöglicht, erlaubt die dreidimensionale Erfassung die vollständige räumliche Darstellung der Strömungs- und Deformationsdynamik. Dies ist besonders vorteilhaft bei der Analyse von komplexen Medien mit nicht-Newtonschem Verhalten und mit lokalen Variationen in der Strömung. Die dreidimensionale Erfassung liefert zusätzliche Informationen über Scherratenverteilungen, Strömungseffekte in der Tiefe und interaktive Struktur-, Phasen- und/oder Partikelbewegungen, beispielsweise in der Analyse von Dispersionen, Suspensionen, Mehrphasenströmungen und viskoelastischen Medien. Die dreidimensionale Erfassung ermöglicht die Identifikation von rheologischen und strukturellen Parametern, die in rein zweidimensionalen Systemen nicht zugänglich sind, wie z. B. eine dreidimensionale Partikeldynamik mit Analyse von Orientierung, Deformation und Wechselwirkungen von Partikeln, die Berechnung des gesamten Fließvolumens, die Ableitung eines Fließprofils und die Erfassung der Verteilung der Partikel im Fließvolumen und nicht nur von Oberflächeneffekten, sowie die Identifikation von Gradienten und Unregelmäßigkeiten im gesamten Strömungsquerschnitt.

Gemäß einer Weiterbildung ist die Beobachtungseinheit zur Fluoreszenzdetektion ausgebildet. Die Fluoreszenzdetektion ermöglicht vorteilhaft die gezielte Untersuchung spezifischer Bestandteile des Mediums, wie z. B. von fluoreszierend markierten Partikel, Kontrastmitteln, Markern, Molekülen oder Phasen und erlaubt die Analyse komplexer Systeme wie Dispersionen, Emulsionen oder Mehrphasensysteme, indem bestimmte Analyten hervorgehoben werden. Neben den zuvor beschriebenen Bewegungs- und Deformationsparametern können fluoreszierende Marker oder Kontrastmittel auch genutzt werden, um Partikelkonzentrationen, Diffusionsraten, chemische Reaktionen, Phasentrennungen und, insbesondere in Proteinlösungen, die Proteinverteilung in den Lösungen zu analysieren sowie eine Proteinidentifikation vorzunehmen.

Gemäß einer weiteren Ausführungsform erstreckt sich der Messkanalabschnitt in einer Hauptbewegungsrichtung des Mediums. Vorteilhaft kann der Messkanalabschnitt nahtlos in Medienleitungen bestehender verfahrenstechnischer Anlagen oder von Messgeräten integriert werden, ohne den Strömungsfluss zu stören. Von Vorteil ist des Weiteren, dass durch die Ausrichtung des Messkanalabschnitts entlang der Hauptbewegungsrichtung das Strömungsprofil des Mediums erhalten bleibt und die in Hauptströmungsrichtung erfassten Daten die realen Prozessbedingungen widerspiegeln und insbesondere direkt auf einen Produktionsprozess übertragbar sind. Die längsgerichtete Ausführung des Messkanals minimiert auch Verwirbelungen oder Turbulenzen und dient der Vermeidung von Luftblasen, die bei Querrichtungen oder abweichenden Geometrien auftreten könnten. Die in die Hauptbewegungsrichtung integrierte Anordnung ermöglicht zudem die kontinuierliche Überwachung rheologischer Eigenschaften direkt im Prozessfluss, ohne Unterbrechung beispielsweise zur Probenentnahme für die Analyse in gesonderten Geräten.

Gemäß einer weiteren Ausführungsform weist der Messkanalabschnitt eine runde, unrunde, rechteckige, mehreckige oder schlitzförmig ausgeführte rechteckige Geometrie auf. Die Auswahl unterschiedlicher Querschnittsgeometrien des Messkanalabschnitts ermöglicht vorteilhaft eine Anpassung der Messanordnung an die Eigenschaften des jeweiligen Mediums und die Anforderungen der verfahrenstechnischen Anlage. Runde Querschnitte eignen sich dabei vor allem für laminar fließende Medien, die eine gleichmäßige Strömung erfordern. Unrunde oder rechteckige oder mehreckige Querschnitte vereinfachen die Anordnung des Sichtfensters, während insbesondere schlitzförmig ausgeführte rechteckige Querschnitte besonders für Medien mit geringer Höhe, z. B. dünne Filme, geeignet sind und eine optimierte Partikel- oder Strömungsanalyse dieser Medien ermöglichen. Unrunde Geometrien insbesondere mit geraden Abschnitten (z. B. rechteckige Querschnitte) erlauben die Integration von ebenen Sichtfenstern über die gesamte Breite des Messkanalabschnitts. Von der Erfindung ebenfalls umfasst sind Messkanäle bzw. Messkanalabschnitte in mikrofluidischen Mess- und Analysesystemen und miniaturisierten Mess- bzw. Analysechips/Mikrochips.

Gemäß einer weiteren Ausführungsform der erfindungsgemäßen Messanordnung ist das Sichtfenster im Messkanalabschnitt oberflächenbündig oder gegenüber dem Innendurchmesser des Messkanalabschnittes zurückgesetzt angeordnet. Die oberflächenbündige Anordnung reduziert vorteilhaft Strömungsstörungen, da keine Geometrieänderungen im Messkanal auftreten und gewährleistet eine ungestörte Strömung, sodass rheologische Parameter wie Scherrate oder Viskosität unter realen Prozessbedingungen gemessen werden können. Eine zurückgesetzte Anordnung ermöglicht vorteilhaft die Untersuchung von Normalspannungseffekten, da diese Anordnung des Sichtfensters eine Geometrie zur Verfügung stellt, die sogenannte hole pressure-Effekte hervorruft und die Untersuchung von Normalspannungskomponenten im Medium ermöglicht.

Gemäß einer Weiterbildung ist dem Sichtfenster und/oder der Beobachtungseinheit eine Beleuchtungseinheit zugeordnet. Vorteilhaft wird eine verbesserte Bildqualität durch gleichmäßige und anpassbare Ausleuchtung von transparente, trüben und fluoreszierende Medien erreicht. Hierdurch werden die detaillierte Analyse von Partikeln, Strömungsprofilen und rheologischen Parametern verbessert und in Abhängigkeit von der gewählten Lichtquelle Fluoreszenz- und 3D-Analysemethoden ermöglicht.

Gemäß einer weiteren Ausführungsform sind zwei oder mehr in einer Umfangsrichtung und/oder Längsrichtung versetzt im Messkanalabschnitt angeordnete Sichtfenster und den jeweiligen Sichtfenstern zugeordnete Beobachtungseinheiten vorgesehen. Die Anordnung gemäß der bevorzugten Ausführungsform ermöglicht vorteilhaft die gleichzeitige Erfassung von Strömungs- oder Deformationsparametern aus unterschiedlichen Winkeln. Die Anordnung in Strömungsrichtung erlaubt vorteilhaft die Analyse von Veränderungen der rheologischen Eigenschaften des Mediums, wie Scherung, Deformation oder Relaxation, entlang des Messkanalabschnittes. Als weiterer Vorteil ist anzusehen, dass die Kombination aus Sichtfenstern in Umfangs- und Längsrichtung eine quasi-dreidimensionale Analyse der Strömungs- und Deformationsparameter durch entsprechende Kombination bzw. Überlagerung der erfassten Bilddaten in der Auswertesoftware, und somit eine vollständige räumliche Darstellung der Strömungsdynamik ermöglicht.

Gemäß einer Weiterbildung ist eine mit der Beobachtungseinheit verbundene Auswerteeinheit vorgesehen. Vorteilhaft werden die erfassten Bild- oder Videodaten in der Auswerteeinheit unmittelbar analysiert und eine Echtzeiterfassung und -auswertung rheologischer Parameter wie Viskosität, Scherrate und Partikelbewegungen ermöglicht. Die Analyse in Echtzeit erlaubt es, Produktionsprozesse bei Abweichungen der rheologischen Eigenschaften unmittelbar anzupassen. Von Vorteil ist, dass die Auswerteeinheit die Interpretation der optischen Daten, z. B. durch Algorithmen zur Bildverarbeitung oder durch KI-gestützte Analyse durchführen kann, wobei komplexe Auswertungen, wie die Bestimmung von Strömungsprofilen, Deformationsmustern oder Partikelverhalten softwaregestützt effizient durchgeführt werden. Die Auswerteeinheit ermöglicht vorteilhaft die Berechnung spezifischer rheologischer Größen, einschließlich Viskosität und Scherrate, Dehnviskosität und viskoelastischen Eigenschaften aber auch von Partikeleigenschaften wie Größe, Form und Konzentration auf Basis einer rein optischen Erfassung des Mediums. Zusätzlich hierzu kann die Auswerteeinheit optional dazu ausgebildet werden, weitere im Rahmen der Analyse erfasste Parameter, wie der pH-Wert und die Temperatur des untersuchten Mediums zu erfassen und in die Berechnung aufzunehmen.

Gemäß einer weiteren Ausführungsform ist der Messkanalabschnitt in einer Medienleitung der verfahrenstechnischen Anlage oder in einer aus der Medienleitung abgezweigten Bypass-Leitung angeordnet. Die Platzierung in der Hauptmedienleitung ermöglicht vorteilhaft eine einfache und direkte Erfassung rheologischer Parameter ohne zusätzliche Leitungsmodifikationen, wodurch Platz eingespart und Installationsaufwand reduziert wird. Zudem bleiben in der Hauptleitung Strömungsbedingungen des Mediums unverändert, wodurch Messwerten unter realistischen Prozessbedingungen erfasst werden.

Die Alternative oder zusätzliche Anordnung der Messanordnung in einer abgezweigten Leitung erlaubt vorteilhaft die gezielte Messung einer Teilmenge des Mediums, ohne den Hauptprozess zu beeinflussen, wobei insbesondere die Strömungsgeschwindigkeit und Druckbedingungen in der Bypass-Leitung spezifisch angepasst werden können, um optimierte Messbedingungen für Medien mit besonderen Eigenschaften (z. B. hohe Viskosität, Partikelbeladung) zu schaffen.

Gemäß einer Weiterbildung des Verfahrens umfasst das Auswerten ein Auswerten von Strömungs- und Deformationsparametern des Mediums. Vorteilhaft können damit Informationen über das Strömungsverhalten und die Deformation des Mediums, die über die reine Viskositätsmessung hinausgehen, anhand rein optischer Eingangsdaten erfasst werden. Dies ermöglicht eine genaue Bestimmung rheologischer Größen wie Scherviskosität, Dehnviskosität und viskoelastischer Eigenschaften.

Gemäß einer Weiterbildung des Verfahrens umfasst das optische Erfassen ein Erfassen von zwei und/oder dreidimensionalen Bild- oder Videosequenzen des Medienstroms. Vorteilhaft sind zweidimensionale Bild- oder Videosequenzen weniger rechen- und speicherintensiv als dreidimensionalen Daten und ermöglichen eine schnellere Verarbeitung in Echtzeit. Dreidimensionale Bilder ermöglichen hingegen vorteilhaft eine räumlich vollständige Analyse von Strömungs- und Deformationsprozessen mit höherer Präzision. Optional besteht die Möglichkeit durch die Verwendung von geeigneten Kontrastmitteln die optische Trennung in unterschiedlichen Wellenlängenbereichen zu verbessern und damit das erfassbare Spektrum zu erweitern, insbesondere auch über das menschlich erfassbare Spektrum hinaus.

Gemäß einer Weiterbildung des Verfahrens umfasst das optische Erfassen ein Erfassen von Bild- oder Videosequenzen von im Medium mitgeführten Partikeln oder wenigstens eines Einzelpartikels, wobei insbesondere das Auswerten einer Partikelform, Partikelgröße, Partikelorientierung, Partikeldeformation, Partikellänge, Partikelfläche und/oder eines Volumens der Partikel oder des wenigstens einen Einzelpartikels und/oder die Partikelanzahl im Medium vorgesehen ist. Vorteilhaft ermöglichen Informationen über Partikelform und - größe die Bewertung der Wechselwirkungen zwischen wenigstens einem Einzelpartikel oder mehreren Partikeln und dem Fluid, die die rheologischen Eigenschaften wie Viskosität und Scherverhalten beeinflussen. Die Orientierung und Deformation von einem oder mehreren Partikeln ermöglicht die Analyse von strömungsinduzierten Mikrostrukturen, die für die viskoelastischen Eigenschaften des Mediums entscheidend sind. Vorteilhaft kann anhand der Partikelanzahl und - verteilung eine genaue Beschreibung der homogenen oder inhomogenen Verteilung in Dispersionen, Emulsionen oder Suspensionen, die direkte Auswirkungen auf Fließeigenschaften haben, erfolgen. Von Vorteil ist auch, dass die Partikeldeformation unter Strömung Informationen über elastische und plastische Eigenschaften des Mediums sowie über mögliche Aggregations- oder Dispersionsprozesse zulässt. Eine Volumen- und Flächenanalyse ermöglicht die Berechnung des volumetrischen Anteils von Partikeln am Medium, wodurch eine Bestimmung der relativen Viskosität oder der Schubspannung erfolgen kann.

Gemäß einer weiteren Ausführungsform umfasst das Auswerten der erfassten Bild- oder Videosequenzen ein Auswerten von Phasentrennungen, insbesondere in dispersen Medien. Das Auswerten von Phasentrennungen in dispersen Medien auf Basis der erfassten Bild- oder Videosequenzen ermöglicht vorteilhaft eine präzise Analyse der Wechselwirkungen zwischen den Phasen und liefert wesentliche Informationen für die rheologische Charakterisierung, wie insbesondere die Erfassung und Beurteilung der dynamischen Stabilität, insbesondere von Dispersionen, Emulsionen oder Mehrphasensystemen unter strömungsinduzierten Bedingungen. Vorteilhaft ermöglicht die Information über Änderungen in der Phasentrennung Rückschlüsse auf die viskoelastischen Eigenschaften des Gesamtsystems, wie interphasische Schubspannungen oder den Dispersionsgrad.

Die obigen Ausführungsformen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1: eine schematische Darstellung einer Messanordnung gemäß eines Ausführungsbeispiels der Erfindung;
- Fig. 2: eine schematische Darstellung einer Messanordnung gemäß eines weiteren Ausführungsbeispiels der Erfindung;
- Fig. 3: eine schematische Schnittdarstellung einer Messanordnung gemäß eines weiteren Ausführungsbeispiels der Erfindung; und
- Fig. 4: ein Ablaufdiagramm eines Verfahrens zur sequenziellen Analyse von Einzelproben in einem Rotations-Rheometer gemäß eines Ausführungsbeispiels der vorliegenden Erfindung.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

Gestrichelte Linien in den Figuren der Zeichnungen verdeutlichen, dass die Verbindungen zwischen den die gestrichelten Linien verbindenden Komponenten nicht zwingend physischen Kontakt miteinander haben müssen, sondern gleichermaßen drahtlos zueinander gekoppelt sein können.

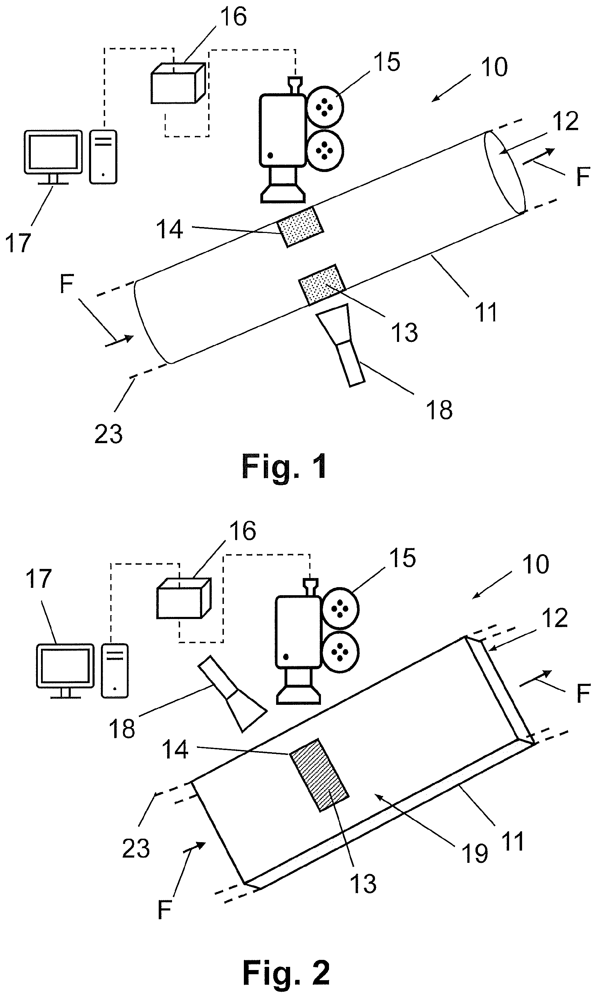

Fig. 1 zeigt eine schematische Darstellung einer Messanordnung 10 gemäß eines Ausführungsbeispiels der Erfindung. Die dargestellte Messanordnung 10 ist als Inline-Rheometer in einer verfahrenstechnischen Anlage integriert. Der Messkanalabschnitt 11 weist einen runden Leitungsquerschnitt 12 auf, durch den sich das durch das Sichtfenster 14 erkennbare Medium 13 in einer durch die Pfeile F angegebenen Fließrichtung bewegt. Der Messkanalabschnitt 11 ist mit mindestens einem Sichtfenster 14 ausgestattet, durch das optische Messungen des strömenden Mediums 13 durchgeführt werden. Dem Sichtfenster 14 ist eine hier lediglich stark schematisiert dargestellte Beobachtungseinheit 15, beispielsweise eine Kamera- und/oder Mikroskopeinheit, zugeordnet. Diese Beobachtungseinheit 15 erfasst Bild- oder Videodaten, die für die rheologische Analyse des Mediums 13 herangezogen werden, einschließlich Strömungsprofilen, Deformationsparametern und Partikelbewegungen.

Die Beobachtungseinheit 15 ist mit einer Auswerteeinheit 16 verbunden, die die erfassten Daten analysiert. Diese Auswerteeinheit 16 führt eine Echtzeitanalyse der aufgezeichneten Bilddaten und/oder Videosequenzen aus und überträgt die Ergebnisse an einen Computer 17, der eine Darstellung der Messdaten und/oder Auswertungen sowie optional eine direkte Anzeige der erfassten Bilddaten durchführt. Ergänzend ist eine Beleuchtungseinheit 18 vorgesehen, die im Bereich eines der Beobachtungseinheit 15 gegenüberliegenden Sichtfenster 14 angeordnet ist und deren Licht das Medium 13 durchdringt und die Qualität der optischen Erfassung verbessert. Das dargestellte Ausführungsbeispiel zeigt eine einfache Integration des Messkanalabschnitts 11 in eine bestehende Medienleitung 23, wodurch eine kontinuierliche und störungsfreie Messung im laufenden Prozess gewährleistet ist.

Fig. 2 zeigt eine schematische Darstellung einer Messanordnung 10 gemäß eines weiteren Ausführungsbeispiels der Erfindung, die als Inline-Rheometer in eine verfahrenstechnische Anlage integriert ist. Der dargestellte, ebenfalls in eine Medienleitung 23 integrierte Messkanalabschnitt 11 weist einen rechteckigen Leitungsquerschnitt 12 auf, der sich entlang der durch den Pfeil F angezeigten Fließrichtung des durch das Sichtfenster 13 erkennbaren Mediums 13 erstreckt. Im zentralen Bereich 19 des rechteckigen Messkanalabschnitts 11 befindet sich ein flächenbündig eingesetztes Sichtfenster 14, das eine störungsfreie Strömung des Mediums 13 gewährleistet. Dieses Sichtfenster 14 ist aus einem transparenten Material gefertigt, das optische Messungen mit hoher Genauigkeit zulässt. Alternativ könnte das Sichtfenster 14 auch zurückversetzt angeordnet sein, wodurch die Untersuchung von hole pressure-Effekten zur Analyse von Normalspannungen in viskoelastischen Medien möglich wird.

Die Bewegung des Mediums 13, das durch den Messkanalabschnitt 11 fließt, kann unterschiedlich ausgebildet sein, beispielsweise strömend, d.h. in laminarer, turbulenter oder sekundärer Bewegung; oszillierend, d.h. zur Analyse von Ruhestrukturen oder dynamischen Relaxationseffekten, oder dispers, d.h. bestehend aus Partikeln, Phasengrenzen oder Mehrphasensystemen. Die Messanordnung 10 ist mit einer Beobachtungseinheit 15 ausgestattet, die hochauflösende Bild- oder Videodaten des Mediums 13 durch das Sichtfenster 14 erfasst. Die Optik der Beobachtungseinheit 15 ist flexibel konfigurierbar, beispielsweise als konfokales Mikroskop zur dreidimensionale Mikroanalyse von Strömungsprofilen, Partikeldynamik und Materialstrukturen; als Kamera mit fokussierbarer Optik, wobei der Fokus auf verschiedene Ebenen des Mediums 13 gerichtet werden kann, um eine mehrdimensionale Erfassung der Strömung zu ermöglichen; als Kamera oder Mikroskop mit fluoreszenzbasierter Optik, um mit fluoreszierenden Markern beispielsweise spezifische Bestandteile des Mediums 13 hervorzuheben und zu analysieren. Die durch die Beobachtungseinheit 15 erfassten Bild- oder Videodaten werden von einer Bildverarbeitungssoftware in einer verbundenen Auswerteeinheit 16 analysiert und an einen Computer 17 zur Speicherung, weiteren Auswertung und/oder graphischen Aufbereitung weitergegeben. Zur Verbesserung der Qualität der optischen Erfassung ist im Ausführungsbeispiel der Fig. 2 neben der Beobachtungseinheit 15 eine Beleuchtungseinheit 18 angeordnet, die auf das Sichtfenster 14 bzw. den Medienstrom gerichtet, diese durch Auflichtbestrahlung ausleuchtet. Die in der Messanordnung 10 durchführbaren rheometrischen Auswertungen umfassen beispielsweise eine Partikelanalyse und -charakterisierung hinsichtlich Form, Größe und Orientierung. Die Erkennung und Charakterisierung von Partikeln im Medium 13 liefert detaillierte Informationen über deren Verhalten in der Strömung. Des Weiteren kann eine Analyse der Anzahl-, Längen-, Flächen- und Volumenverteilungen zur Beurteilung der Partikelhomogenität und -stabilität im Medium 13 durchgeführt werden. Auch kann die Verformungen von Partikeln unter Scher- oder Normalspannungen analysiert werden, wodurch Rückschlüsse auf die viskoelastischen Eigenschaften des Mediums 13 ermöglicht werden. Die Auswertung von Phasengrenzen in dispersen Systemen ermöglicht darüber hinaus die Beurteilung der Stabilität und Dynamik von Emulsionen oder Suspensionen. Erfasst und rechnerisch bewertet werden können auch Strömungs- und Deformationsparameter zur Analyse von laminar-turbulenten Übergängen oder sekundären Strömungen sowie Strukturen und oszillierenden Bewegungen zur Analyse der Ruhestruktur des Mediums 13 sowie von Relaxationseffekten.

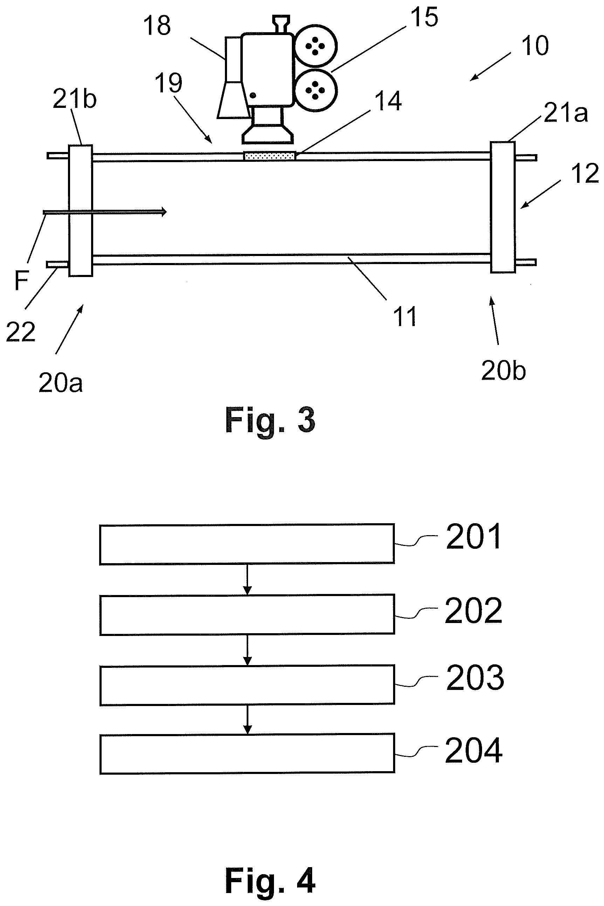

Fig. 3 zeigt eine schematische Schnittdarstellung einer Messanordnung 10 gemäß eines weiteren Ausführungsbeispiels der Erfindung. Die Messanordnung 10 ist als Inline-Rheometer konzipiert und in eine in Fig. 3 nicht dargestellten Medienleitung 23 (vgl. Fig. 1 und 2) einer verfahrenstechnischen Anlage integrierbar. Der Messkanalabschnitt 11 ist als zylindrisches Rohr mit rundem Leitungsquerschnitt 12 ausgeführt, durch das das Medium entlang einer vorgegebenen Strömungsrichtung, gekennzeichnet durch den Pfeil F, geführt wird. Der Messkanalabschnitt 11 weist an seinen axialen Enden 20a, b Flansche 21a, b mit daran angeordneten Verbindungsbolzen 22 zur Integration in ein Leitungssystem einer verfahrenstechnischen Anlage (nicht dargestellt) auf.

Im zentralen Bereich 19 des Messkanalabschnitts 11 befindet sich ein flächenbündig eingesetztes Sichtfenster 14, das eine klare Sicht auf das in Fig. 3 nicht dargestellte durchströmende Medium 13 ermöglicht. Das Sichtfenster 14 ist so gestaltet, dass es den Fluss des Mediums 13 nicht stört und gleichzeitig hochpräzise optische Messungen erlaubt. Alternativ könnte das Sichtfenster 14 auch in dieser Ausführungsform zurückversetzt angeordnet sein, um durch die Erzeugung eines hole pressure-Effektes Normalspannungseffekte zu analysieren.

Direkt oberhalb des Sichtfensters 14 ist eine Beobachtungseinheit 15, beispielsweise eine Kamera oder ein Mikroskop oder eine Kombination davon, angebracht, die mit einer hochauflösenden Optik ausgestattet ist. Diese Optik kann flexibel konfiguriert werden, um verschiedene Messanforderungen, wie im Zusammenhang mit Fig. 2 bereits beschrieben, zu erfüllen. Die Beobachtungseinheit 15 ist mit einer Beleuchtungseinheit 18 gekoppelt, die das Medium 13 und das Sichtfenster 14 ausleuchtet, um eine optimale Bildqualität zu gewährleisten.

Fig. 4 zeigt ein Ablaufdiagramm eines Verfahrens zur Echtzeiterfassung von rheologischen Parametern eines Mediums 13 in einer wie zuvor beschriebenen Messanordnung 10. Im Verfahren erfolgt im Schritt 201 ein optisches Erfassen von Bild- oder Videosequenzen eines das Sichtfenster 14 des Messkanalabschnittes 11 passierenden Mediums 13 oder Medienstroms durch die Beobachtungseinheit 15. Im nächsten Schritt 202 werden die erfassten Bild- oder Videosequenzen an eine Auswerteeinheit 16 übertragen. Die Übertragung kann kabellos, beispielsweise über eine W-LAN oder Bluetooth-Verbindung oder kabelgebunden zwischen Beobachtungseinheit 15 und Auswerteeinheit 16 erfolgen. Alternativ können die erfassten Bild- oder Videosequenzen datentechnisch auch direkt auf einen Server oder in eine Datencloud übermittelt und dort ausgewertet und/oder gespeichert werden. Im der Übertragung nachfolgenden Schritt 203 erfolgt ein Auswerten der erfassten Bild- oder Videosequenzen zur Bestimmung von rheologischen Parameter des Mediums 13. Die Daten der ausgewerteten Bild- oder Videosequenzen werden dabei in einen Datensatz umgewandelt und im Schritt 204 als das Medium 13 charakterisierender Datensatzes zur weiteren Verwendung in beispielsweise einer Software zur Detailauswertung oder graphischen Darstellung der Messergebnisse oder zur Ableitung weiterer rheologischer Parameter ausgegeben.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 10: Messanordnung
- 11: Messkanalabschnitt
- 12: Leitungsquerschnitt
- 13: Medium
- 14: Sichtfenster
- 15: Beobachtungseinheit
- 16: Auswerteeinheit
- 17: Computer
- 18: Beleuchtungseinheit
- 19: Bereich
- 20a, b: axiales Ende
- 21a, b: Flansch
- 22: Verbindungsbolzen
- 23: Medienleitung
- F: Strömungsrichtung
- 201: Schritt
- 202: Schritt
- 203: Schritt
- 204: Schritt

## Patentansprüche

1. Messanordnung (10), umfassend einen in einer verfahrenstechnischen Anlage oder einem Messgerät integrierbaren, von einem Medium (13) durchströmbaren Messkanalabschnitt (11), wobei der Messkanalabschnitt (11) wenigstens ein Sichtfenster (14) und wenigstens eine dem Sichtfenster (14) zugeordnete Beobachtungseinheit (15) zur optischen Erfassung des Mediums (13) aufweist.

2. Messanordnung (10) nach Anspruch 1, **dadurch gekennzeichnet, dass** die Beobachtungseinheit (15) als Kamera- und/oder Mikroskopeinrichtung ausgebildet ist, wobei die Beobachtungseinheit (15) insbesondere für eine Erfassung von Bewegungs- und/oder Deformationsparametern des Mediums (13) oder wenigstens einer im Medium mitgeführten Struktur eingerichtet ist.

3. Messanordnung (10) nach einem der vorhergehenden Ansprüche, **dadurch gekennzeichnet, dass** die Beobachtungseinheit (15) für eine zwei- und/oder dreidimensionale Erfassung der Bewegungs- und/oder Deformationsparameter eingerichtet ist.

4. Messanordnung (10) nach einem der vorhergehenden Ansprüche, **dadurch gekennzeichnet, dass** die Beobachtungseinheit (15) zur Fluoreszenzdetektion ausgebildet ist.

5. Messanordnung (10) nach einem der vorhergehenden Ansprüche, **dadurch gekennzeichnet, dass** sich der Messkanalabschnitt (11) in eine Hauptbewegungsrichtung des Mediums (13) erstreckt.

6. Messanordnung (10) nach einem der vorhergehenden Ansprüche, **dadurch gekennzeichnet, dass** der Messkanalabschnitt (11) eine runde, unrunde, rechteckige, mehreckige oder schlitzförmig ausgeführte rechteckige Geometrie des Leitungsquerschnittes (12) aufweist.

7. Messanordnung (10) nach einem der vorhergehenden Ansprüche, **dadurch gekennzeichnet, dass** das Sichtfenster (14) im Messkanalabschnitt (11) oberflächenbündig oder gegenüber dem Innendurchmesser des Messkanalabschnittes (11) zurückgesetzt angeordnet ist.

8. Messanordnung (10) nach einem der vorhergehenden Ansprüche, **dadurch gekennzeichnet, dass** dem Sichtfenster (14) und/oder der Beobachtungseinheit (15) eine Beleuchtungseinheit (18) zugeordnet ist.

9. Messanordnung (10) nach einem der vorhergehenden Ansprüche, **dadurch gekennzeichnet, dass** zwei oder mehr in einer Umfangsrichtung und/oder Längsrichtung versetzt im Messkanalabschnitt (11) angeordnete Sichtfenster (14) und den jeweiligen Sichtfenstern (14) zugeordnete Beobachtungseinheiten (15) und/oder Beleuchtungseinheiten (18) vorgesehen sind.

10. Messanordnung (10) nach einem der vorhergehenden Ansprüche, **dadurch gekennzeichnet, dass** eine mit der Beobachtungseinheit (15) verbundene Auswerteeinheit (16) vorgesehen ist.

11. Messanordnung (10) nach einem der vorhergehenden Ansprüche, **dadurch gekennzeichnet, dass** der Messkanalabschnitt (11) in einer Medienleitung der verfahrenstechnischen Anlage oder des Messgerätes, oder in einer aus der Medienleitung abgezweigten Bypass-Leitung angeordnet ist.

12. Verfahren zur Echtzeiterfassung von rheologischen Parametern eines Mediums (13) in einer Messanordnung (10) nach einem der Ansprüche 1 bis 11, umfassend die Schritte:
- Optisches Erfassen von Bild- oder Videosequenzen eines das Sichtfenster (14) des Messkanalabschnittes (11) passierenden Medienstroms durch die Beobachtungseinheit (15);
- Übertragen der erfassten Bild- oder Videosequenzen an eine Auswerteeinheit (16);
- Auswerten der erfassten von Bild- oder Videosequenzen zur Bestimmung von rheologischen Parameter des Mediums (13); und
- Ausgeben eines das Medium (13) charakterisierenden Datensatzes.

13. Verfahren nach Anspruch 12, **dadurch gekennzeichnet, dass** das Auswerten ein Auswerten von Strömungs- und Deformationsparametern des Mediums (13) umfasst.

14. Verfahren nach Anspruch 12 oder 13, **dadurch gekennzeichnet, dass** das optische Erfassen ein Erfassen von zwei und/oder dreidimensionalen Bild- oder Videosequenzen des Medienstroms umfasst.

15. Verfahren nach einem der Ansprüche 12 bis 14, **dadurch gekennzeichnet, dass** das optische Erfassen ein Erfassen von Bild- oder Videosequenzen von wenigstens einem im Medium (13) mitgeführten Partikel umfasst, wobei insbesondere das Auswerten einer Partikelform, Partikelgröße, Partikelorientierung, Partikeldeformation, Partikelanzahl, Partikellänge, Partikelfläche und/oder eines Volumens des wenigstens eine Partikels im Medium vorgesehen ist.

16. Verfahren nach einem der Ansprüche 12 bis 15, **dadurch gekennzeichnet, dass** das Auswerten der erfassten Bild- oder Videosequenzen ein Auswerten von Phasentrennungen, insbesondere in dispersen Medien (13), umfasst.

17. Verfahrenstechnische Anlage oder Messgerät umfassend wenigstens eine Messanordnung (10) nach einem der Ansprüche 1 bis 11.
